Europäisches Patentamt

(19) European Patent Office

Office européen des brevets

(11) Publication number: **0 089 755**
**A2**

## (12) EUROPEAN PATENT APPLICATION

(21) Application number: 83301024.2

(22) Date of filing: 25.02.83

(51) Int. Cl.³: **B 26 F 1/24**
//B23P15/02

(30) Priority: 11.03.82 GB 8207094

(43) Date of publication of application:
28.09.83 Bulletin 83/39

(84) Designated Contracting States:
DE FR GB IT

(71) Applicant: WESTLAND plc

Yeovil Somerset(GB)

(72) Inventor: Mills, John Barry
19 Primrose Lane
Yeovil Somerset(GB)

(74) Representative: Jack, Bruce James et al,
FORRESTER & BOEHMERT Widenmayerstrasse 4/1
D-8000 Munchen 22(DE)

(54) Method of producing apertures in fibre-reinforced articles such as helicopter rotor blades.

(57) A method of producing apertures in fibre-reinforced articles is described and consists of locally heating an area of the unconsolidated article and piercing the heat-softened area using a tapered piercing tool. Following withdrawal of the tool, an aperture retaining means is inserted to retain the shape of the aperture during a subsequent consolidation operation.

The method ensures that all of the strength bearing fibres are retained and also that none of the fibres is severed, and is particularly suited to the formation of attachment apertures at the root end of a helicopter rotor blade.

FIG.1

Title: "Method of Producing Apertures in Fibre-reinforced Articles such as Helicopter Rotor Blades"

THIS INVENTION relates to a method of producing apertures in fibre-reinforced articles and is particularly concerned with a method of producing attachment apertures at the root end of a helicopter rotor blade.

The use of fibres such as glass, carbon, boron, etc., is now widespread in the manufacture of various articles and structural components. The fibres are embedded in a resin matrix, usually comprising a thermo-setting resin, and pre-impregnated sheets are available in which the fibres are either woven or arranged unidirectionally. Usually, the desired thickness of an article is obtained by laying the requisite number of fibre sheets one on top of the other, followed by consolidation of the article by the application of pressure and heat.

It is often necessary to provide apertures such as bolt holes through fibre-reinforced articles in order to facilitate attachment to other items. Conventionally, such apertures are formed by drilling or boring and this can cause problems due to delamination, undesirable dust and the inconvenience of handling often unwieldy structures.

Not surprisingly, the combination of low weight with high strength has resulted in many proposals for the use of fibre-reinforced materials in the aircraft industry. For example, it has been proposed to manufacture both helicopter main and tail rotor blades from such materials, and the provision of attachment apertures at the root end of such blades has highlighted another significant problem in that the drilling through of a laminate reduces the strength of the component both by reducing the cross-sectional area of each layer of fibre-reinforcement and also by causing a

break in fibre continuity.

Many proposals have been made for overcoming these problems. Most of these proposals involve the winding of the fibres around some form of bush or other apertured former at the root end, which former is then retained in the component during consolidation. This often requires special tooling and generally prohibits the use of pre-impregnated sheet material, requiring the use of tape material which, in turn, necessitates the provision of a specialised tape-laying machine.

Accordingly, in one aspect the invention provides a method of producing an aperture in a fibre-reinforced article consisting of a plurality of sheets of pre-impregnated fibre-reinforced material laid one on top of the other and subsequently consolidated by the application of pressure and heat, characterised by the steps of locally heating an area of the unconsolidated article in which the aperture is to be provided, piercing the heat-softened area of the article using a tapered piercing tool whereby the individual fibres of each sheet are parted by the passage of the tool, withdrawing the tool and thereafter consolidating the article.

An aperture-retaining means may be inserted following withdrawal of the tool and before consolidation of the article. Conveniently, such means may comprise a plug manufactured of or coated with a non-adhesive material, e.g. P.T.F.E., to facilitate its removal after consolidation.

Preferably, the local heating of the article is accomplished by microwaves to provide a uniform heating and softening of the resin throughout the thickness of the article.

In another aspect, the invention provides a method of providing an aperture in the root end of a helicopter rotor blade which comprises a plurality of sheets of pre-impregnated fibre-reinforced material laid one on top of the other and subsequently consolidated by the application of pressure and heat, characterised by the steps of locally heating an area of the unconsolidated blade root end in which the aperture is to be provided, piercing the heat-softened area using a tapered piercing tool whereby the individual fibres of each sheet are parted by the passage of the tool, withdrawing the tool, locating a plug coated with non-adhesive material in the aperture, consolidating the rotor blade, removing the plug, inserting a metal bush in the aperture and bonding the bush in position.

The invention will now be described by way of example only and with reference to the accompanying drawings in which:

FIGURE 1 is a sectioned end elevation illustrating the method of the invention and as used in the production of a number of test pieces;

FIGURE 2 is a fragmentary plan view of the root end of a helicopter rotor blade constructed in accordance with a prior art method; and

FIGURE 3 is a similar fragmentary plan view illustrating the root end of a helicopter rotor blade constructed in accordance with the invention.

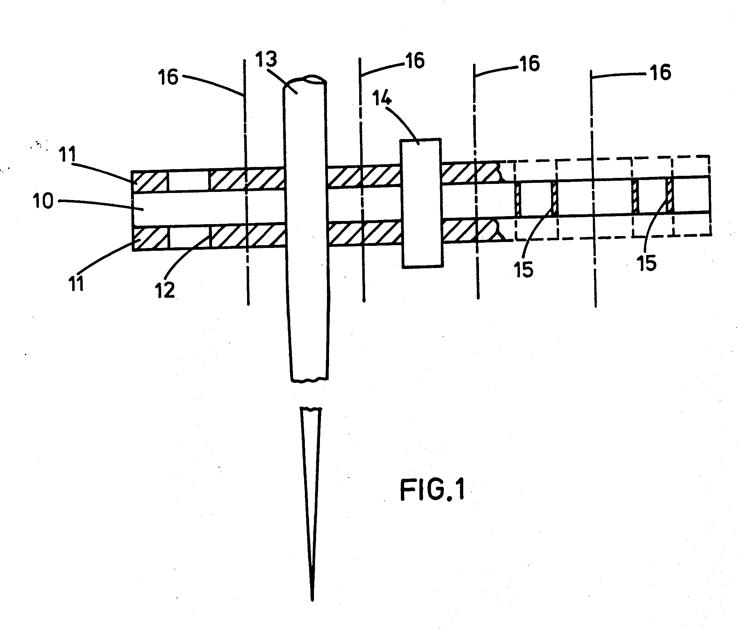

Figure 1 is a composite representation of the successive steps in applying the method of the invention to the production of a number of identical test pieces of apertured fibre-reinforced laminate.

Firstly, a laminate 10 330mm (thirteen inches) square and approximately 12mm (one half inch) thick was laid up using a plurality of layers, some of woven glass fibres and some of unidirectional glass and carbon fibres, each pre-impregnated with a thermo-setting resin. This laminate 10 was then placed between two plates 11 of a non-metallic material permeable to microwaves, e.g. bakelite. Five equi-spaced holes 12 of 19mm (three quarter inch) diameter were provided in each of the plates 11, spaced equally from one edge, the plates 11 being positioned so that the holes 12 in the respective plates 11 were aligned on each side of the laminate 10.

With the exception of the apertured areas, the surfaces of the plates 11 were masked with a microwave reflective material, e.g. aluminium tape (not shown), leaving an unmasked area of about 50mm by 330mm (two inches by thirteen inches) at the apertured end of the plates.

The assembly was then exposed to microwaves using a heating cycle comprising an average of 260 watts for two minutes, and this raised the temperature of the laminate locally to 60°C and evenly throughout the thickness of the laminate. The even distribution of heat throughout the thickness of the laminate is important to the method of the invention since it ensures that the impregnating resin in the respective layers of fibre-reinforced plastics materials is rendered viscous throughout the thickness of the laminate.

Using the holes 12 in the plates 11 as guides, a piercing tool 13 comprising a pointed metal stake having a two degree taper and coated with P.T.F.E. was used to pierce the laminate. The tool 13 was then removed and a P.T.F.E. plug was inserted in the resultant apertures through the laminate in order to retain their shape.

The action of piercing the laminate in its plasticised condition serves to part the individual fibres of each layer, and sectioned samples have demonstrated that the fibres flow continuously around the pierced hole, and that 100 per cent fibre is retained.

The plates 11 were removed from the laminate 10 which was then consolidated by the application of pressure and heat in a conventional manner.

Following consolidation, the P.T.F.E. plugs 14 were removed and metal bushes 15 having an internal diameter of 12mm (one half inch) were bonded into the apertures. The laminate was then cut into five specimens as indicated by the broken lines 16, each specimen having a bushed hole at one end and measuring approximately 65mm (two and one half inches) wide by 330mm (thirteen inches) long by 12mm (one half inch) thick. Metal gripping plates (not shown) were then bonded to both surfaces of each specimen adjacent the end remote from the bushed hole. One of the specimens was damaged in manufacture.

Each of the remaining four specimens in turn was then loaded into a tensile test machine. A pin was located in the bushed hole and attached to load links coupled to a bar gripped in upper jaws of the machine, and the gripping plates at the other end were gripped in the lower jaws.

The specimen was then loaded until failure occurred, and the failure load of specimens numbered 1 to 4 are shown in the table:-

| Specimen No. | Pierced Specimen Static Failure load | | Drilled Specimen Static Failure load | |
|---|---|---|---|---|
| | N | (lbf) | N | (lbf) |
| 1 | 7374 | (32800) | 5810 | (25842) |
| 2 | 6295 | (28000) | 5633 | (25056) |
| 3 | 6677 | (29700) | 5961 | (26516) |
| 4 | 6835 | (30400) | 5633 | (25056) |
| Mean Value | 6795 | (30225) | 5759 | (25617) |

Not surprisingly, the failures propagated from the area of the bushed holes and these areas were then cut off and the same specimens used again for a comparison testing of conventional drilled and bushed holes. Thus, a 19mm (three quarter inch) diameter hole was drilled through the specimen and a metal bush bonded into the hole. The specimens were again attached into the test machine and were again loaded until failure occurred, and the failure load of the same four specimens with drilled holes is also included in the table. The use of the same specimens in each of the tests eliminates erroneous results due to specimen variations and enables a direct comparison to be made.

A comparison of the failure loads clearly indicates the improvement achieved by the method of this invention, the mean failure load of the pierced specimens being about one hundred and eighteen per cent of that of the drilled specimens.

This improvement is attributable to the method of this invention in which the action of piercing the laminate in its plasticised condition serves to part the individual fibres of each layer, whereas the conventional drilling after consolidation severs some of the fibres of each layer. Indeed, sectioned samples constructed in accordance with the method of this invention have demonstrated the features that the fibres flow continuously around the pierced holes and that one hundred per cent fibre is retained throughout the length of the laminate.

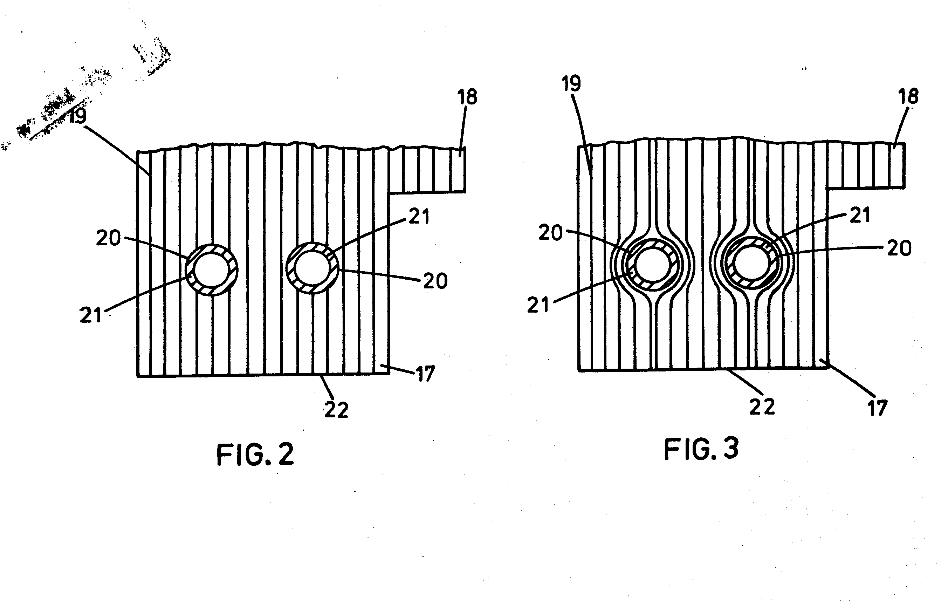

This will now be illustrated with reference to Figures 2 and 3. Figure 2 illustrates a prior art method of providing bushed attachment apertures at the root end 17 of a helicopter rotor blade 18. The longitudinally extending parallel lines 19 illustrate the unidirectional fibres in an outer sheet of pre-impregnated fibre-reinforced material although it will be understood that the spacing distance has been greatly exaggerated for clarity.

After consolidation, the root end 17 of rotor blade 18 is located in a drilling fixture (not shown) and two finished size apertures 20 are drilled or bored through its thickness. After removal from the fixture, metal bushes 21 are inserted in the apertures and bonded in position. It is often necessary to machine the outer surfaces of the bushes flush with the external surfaces of the root end 17. From a viewing of Figure 2, it will be clear that the drilling of the apertures 20 not only removes a significant amount of the reinforcing fibres 19 of each layer but also severs every one of the fibres 19 in each layer which lie within a lateral dimension equivalent to the diameter of the apertures 20. This considerably reduces the strength of the root end attachment especially in a longitudinal direction which is a very important aspect due to the high centrifugal loads encountered during operation of a rotor blade.

Referring now to Figure 3, it will be seen that the action of piercing the apertures 20 in the method of the invention serves to displace the individual fibres 19 of each sheet to the extent that individual fibres 19 flow around the circumference of the aperture 20 and the subsequently bonded bush 21. Thus, not only is the total bulk of the reinforcing fibres 19 retained in the root end 17, but also none of the fibres 19 is severed, so that the fibres extend continuously from the blade 18, around the bushes 21 to terminate at an inner edge 22 of the root end 17.

With regard to sheets of woven fibre-reinforced material included in the blade root end 17 it will be clear that the prior art method of Figure 2 will again result in severing of the fibres whereas the production of the test samples of Figure 1 has shown that the method of the invention ensures that individual fibres of a woven format also are retained in total and are not severed by the piercing action of the tool 13.

In the construction of a rotor blade according to the method of this invention it will be understood that the piercing tool guide apertures can be incorporated in the mould tool in which the blade is laid up, and that the piercing operation and location of the aperture-retaining plugs will be accomplished prior to a normal consolidation operation.

CLAIMS

1.    A method of producing an aperture in a fibre-reinforced article consisting of a plurality of sheets of pre-impregnated fibre-reinforced material laid one on top of the other and subsequently consolidated by the application of pressure and heat, characterised by the steps of locally heating an area of the unconsolidated article in which the aperture is to be provided, piercing the heat-softened area using a tapered piercing tool whereby the individual fibres of each sheet are parted by the passage of the tool, withdrawing the tool, and consolidating the article.

2.    A method according to Claim 1, further characterised by the step of inserting an aperture-retaining means in the aperture following withdrawal of the tool and prior to consolidation.

3.    A method according to Claim 2, further characterised in that the aperture-retaining means comprises a plug coated with a non-adhesive material.

4.    A method according to Claim 2 or 3, further characterised by the step, after consolidating the article, of withdrawing the aperture-retaining means, inserting a metal bush in the aperture and bonding the bush in position.

5.    A method according to any preceding claim, further characterised in that the local heating is accomplished by microwaves.

6.    A method of producing an aperture in the root end of a helicopter rotor blade which comprises a plurality of sheets or pre-impregnated fibre-reinforced material laid one on top of the other and subsequently con-solidated by the application of pressure and heat, characterised by the steps of locally heating an area of the unconsolidated blade root end in which the aperture is to be provided, piercing the heat-softened area using a tapered piercing tool whereby the individual fibres of each sheet are parted by the passage of the tool, withdrawing the tool, locating a plug coated with a non-adhesive material in the aperture, consolidating the rotor blade, removing the plug, inserting a metal bush in the aperture and bonding the bush in position.

0089755

FIG.1

FIG. 2

FIG. 3